# EUROPEAN PATENT SPECIFICATION

(11) **EP 3 627 182 B1**
(45) Date of publication and mention of the grant of the patent: **23.06.2021**
(21) Application number: 17909902.3
(22) Date of filing: 16.05.2017
(51) Int. Cl.: G01S 7/52, G01S 15/87, G01S 15/04, G01S 15/06, B63G 8/00, G01S 15/88

(54) **CONTROL APPARATUS, MONITORING SYSTEM, AND MONITORING METHOD**
STEUERUNGSVORRICHTUNG, ÜBERWACHUNGSSYSTEM UND ÜBERWACHUNGSVERFAHREN
APPAREIL DE COMMANDE, SYSTÈME ET PROCÉDÉ DE SURVEILLANCE

(43) Date of publication of application: 25.03.2020
(73) Proprietor: NEC Corporation, Tokyo 108-8001 (JP)
(72) Inventor: EMURA, Masafumi, Tokyo 108-8001 (JP); OGAWA, Masatsugu, Tokyo 108-8001 (JP); ICHIEN, Masumi, Tokyo 108-8001 (JP)
(74) Representative: Betten & Resch
(86) International application number: PCT/JP2017/018278
(87) International publication number: WO 2018/211575

(56) References cited:
- WO-A1-2007/004217
- JP-A- 2011 215 775
- JP-A- 2011 215 775
- JP-A- 2016 119 627
- JP-A- 2016 119 627
- US-A1- 2016 236 760
- US-B1- 6 850 173
- HONGYUAN SHI ET AL: "Incorporating Environmental Information into Underwater Acoustic Sensor Coverage Estimation in Estuaries", MILITARY COMMUNICATIONS CONFERENCE, 2007. MILCOM 2007. IEEE, IEEE, PISCATAWAY, NJ, USA, 29 October 2007 (2007-10-29), pages 1-7, XP031232624, ISBN: 978-1-4244-1512-0
- GROSS P ET AL: "The application of sector scanning sonar and multibeam imaging sonar for underwater security", OCEANS 2007, IEEE, PISCATAWAY, NJ, USA, 29 September 2007 (2007-09-29), pages 1-7, XP031229151,

## Description

### [Technical Field]

The present invention relates to a monitoring technique, and more particularly relates to a technique for performing monitoring suitable for an environmental condition by using an installation-type sensor and a mobile sensor.

### [Background Art]

In a wide field, a monitoring system using a plurality of installation-type sensors is used. Further, such a monitoring system is often required to reliably perform monitoring within a region to be monitored. However, a characteristic fluctuation of a sensor due to an environmental change in a region to be monitored changes a coverage area of the sensor, and a region in which monitoring cannot be performed by an installed sensor may be generated.

In order to reliably continue monitoring within a region to be monitored, for example, it is conceivable to dispose sensors closely. However, an increase in the number of sensors leads to many sensors being installed, and there is a risk that a configuration of a monitoring system becomes complicated. Thus, it is desirable that monitoring can continue even when a region in which monitoring cannot be performed by an installation-type sensor is generated, while suppressing complication of a configuration of a monitoring system. Thus, development of a technique for monitoring, by another method, a region in which monitoring cannot be performed by an installation-type sensor is conducted. As such a technique for monitoring a region in which monitoring cannot be performed by an installation-type sensor, for example, a technique as in PTL 1 is disclosed.

PTL 1 is related to a monitoring system that combines an installation-type camera with a flying-type monitoring device. When the monitoring system in PTL 1 determines that a subject to be tracked cannot be detected by the installation-type camera, the monitoring system predicts a position of the subject to be tracked. The monitoring system in PTL 1 performs detection of a subject to be tracked that cannot be captured by the installation-type camera by, based on a prediction result of a position of the subject to be tracked, controlling a flying device and performing capturing on the subject to be tracked from the sky in the predicted position.

Documents JP 2016-119627 A and HONGYUAN SHI ET AL, "Incorporating Environmental Information into Underwater Acoustic Sensor Coverage Estimation in Estuaries", 2007, IEEE, XP031232624 represent related art.

### [Citation List]

### [Patent Literature]

[PTL 1] Japanese Unexamined Patent Application Publication No. 2016-119625

### [Summary of Invention]

### [Technical Problem]

However, the technique in PTL 1 is not sufficient due to the following point. The monitoring system in PTL 1 predicts a position of a subject to be tracked, and performs capturing by using a flying device. However, in a monitoring system in which an environment causes a fluctuation in a coverage area of a sensor, such as a sonar system under water, for example, a change in the coverage area also changes a region in which the sensor can perform monitoring. Thus, there is a risk that a point that needs a measurement by a mobile sensor cannot be accurately predicted. In such a case, there is a risk that, even by using the mobile sensor, a region in which the sensor cannot perform monitoring is generated, and thereby a subject to be monitored cannot be detected. Thus, the technique in PTL 1 is also not sufficient as a technique for reliably continuing monitoring when an environmental change causes a fluctuation in a coverage area of an installation-type sensor.

In order to solve the problem described above, an object of the present invention is to provide a control apparatus capable of continuing monitoring even when an environmental change causes a fluctuation in a coverage area of a sensor.

### [Solution to Problem]

The above-mentioned problems are solved by the features of the claims.

### [Advantageous Effects of Invention]

The present invention is able to continue monitoring even when an environmental change causes a fluctuation in a coverage area of a sensor.

### [Brief Description of Drawings]

[Fig. 1] Fig. 1 is a diagram illustrating an outline of a configuration in a first example embodiment of the present invention.
[Fig. 2] Fig. 2 is a diagram illustrating an outline of a configuration of a monitoring system in a second example embodiment of the present invention.
[Fig. 3] Fig. 3 is a block diagram illustrating the configuration of the monitoring system in the second example embodiment of the present invention.
[Fig. 4] Fig. 4 is a block diagram illustrating a configuration of a system control apparatus in the second example embodiment of the present invention.
[Fig. 5] Fig. 5 is a diagram illustrating an example of a movement cost according to the second example embodiment of the present invention.
[Fig. 6] Fig. 6 is a block diagram illustrating a configuration of a sensor-equipped unmanned vehicle in the second example embodiment of the present invention.
[Fig. 7] Fig. 7 is a diagram illustrating an outline of an operation flow in the second example embodiment of the present invention.
[Fig. 8] Fig. 8 is a diagram illustrating an outline of the operation flow in the second example embodiment of the present invention.
[Fig. 9] Fig. 9 is a diagram schematically illustrating a method of calculating an estimated threat degree according to the second example embodiment of the present invention.
[Fig. 10] Fig. 10 is a diagram schematically illustrating a method of calculating a search request value according to the second example embodiment of the present invention.

### [Example Embodiment]

### (First Example Embodiment)

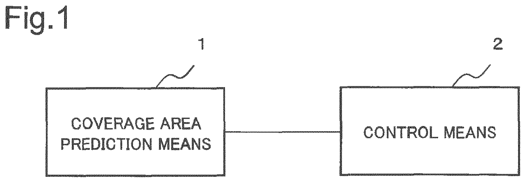

A first example embodiment of the present invention is described in detail with reference to a drawing. Fig. 1 illustrates an outline of a configuration of a control apparatus in the present example embodiment. The control apparatus in the present example embodiment includes a coverage area prediction means 1 and a control means 2. The coverage area prediction means 1 predicts a coverage area being a range in which an installation-type sensor that detects an object can perform a measurement, based on a measurement result of an environment of a region in which the object is to be detected. The control means 2 determines a position in which a mobile sensor that detects the object is to be disposed, based on the coverage area predicted by the coverage area prediction means 1 and a probability that the object is present, and controls the mobile sensor.

The control apparatus in the present example embodiment predicts a coverage area of the installation-type sensor, based on the measurement result of an environment of a region in which the object is to be detected, in the coverage area prediction means 1, and determines a position in which a mobile sensor is to be disposed, based on the prediction result, in the control means 2. The control apparatus in the present example embodiment predicts the coverage area of the installation-type sensor, based on the measurement result of the environment, and can thus accurately predict a position in which the mobile sensor is to be disposed even when an environmental fluctuation changes the coverage area of the installation-type sensor. As a result, monitoring can continue by using the control apparatus in the present example embodiment even when an environmental change causes a fluctuation in the coverage area of the sensor.

### (Second Example Embodiment)

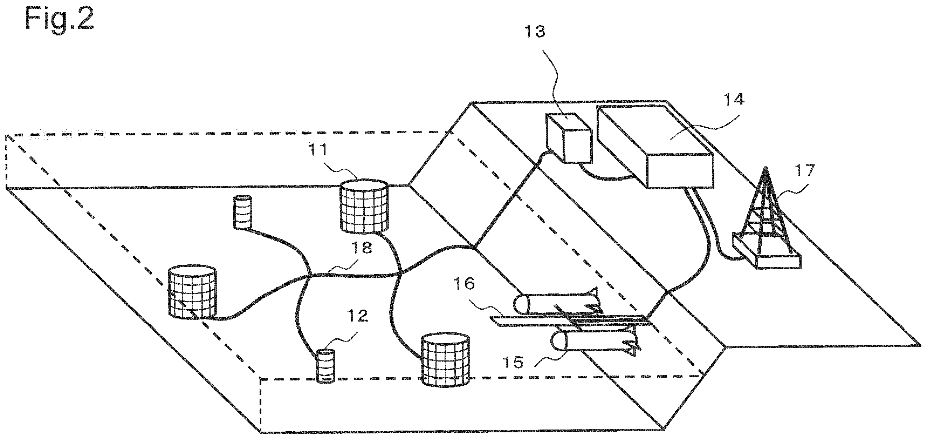

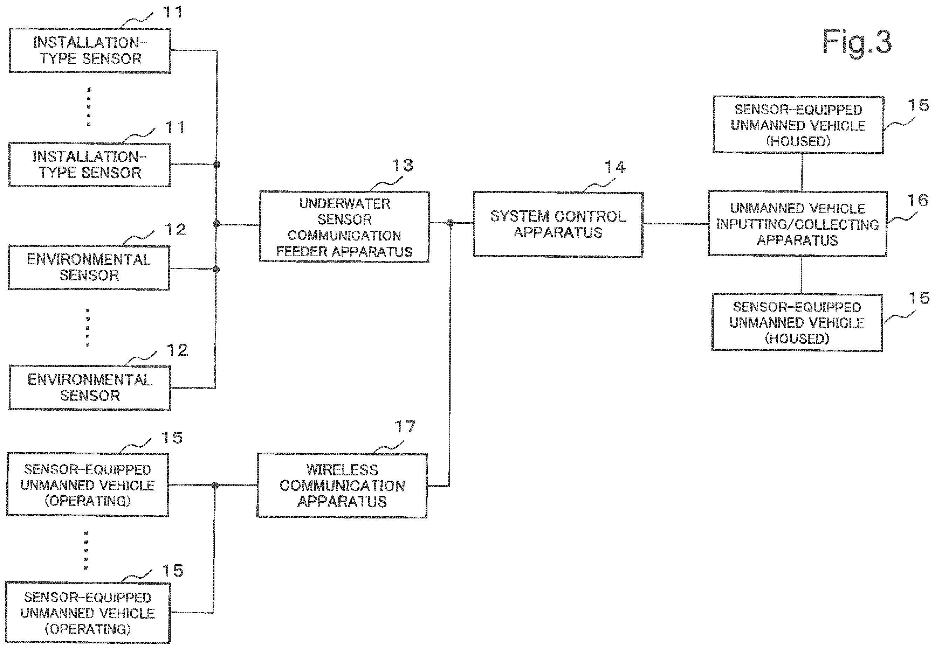

A second example embodiment of the present invention is described in detail with reference to drawings. Fig. 2 is a diagram illustrating an outline of a configuration of a monitoring system in the present example embodiment. Further, Fig. 3 is a block diagram illustrating the configuration of the monitoring system in the present example embodiment. The monitoring system in the present example embodiment is an underwater monitoring system that performs monitoring and a search under water by detecting an object being present in water with a sonar.

The monitoring system in the present example embodiment includes an installation-type sensor 11, an environmental sensor 12, a sensor communication feeder apparatus 13, a system control apparatus 14, a sensor-equipped unmanned vehicle 15, an unmanned vehicle inputting/collecting apparatus 16, and a wireless communication apparatus 17. Further, the installation-type sensor 11 and the environmental sensor 12, and the sensor communication feeder apparatus 13 are connected with an underwater cable 18. Further, the system control apparatus 14 and the sensor communication feeder apparatus 13, the unmanned vehicle inputting/collecting apparatus 16, and the wireless communication apparatus 17 are connected to each other via a communication cable or a communication line.

The installation-type sensor 11 is a sensor that is installed at a plurality of places under water and detects an object being present in water. The installation-type sensor 11 may be singular. For example, an active sonar is used as the installation-type sensor 11 in the present example embodiment. Data measured by the installation-type sensor 11 are transmitted, as sensor information, to the system control apparatus 14 via the underwater cable 18 and the sensor communication feeder apparatus 13.

The environmental sensor 12 is a sensor that acquires data used for calculating a coverage area of the installation-type sensor 11, namely, a range in which the sensor can detect an object in water. The environmental sensor 12 is installed at a plurality of places under water. The environmental sensor 12 may be singular. The environmental sensor 12 is constituted of, for example, a water temperature sensor that measures a water temperature being used when sound speed data under water is calculated, and an electrical conductivity sensor that measures an electrical conductivity. Data measured by the environmental sensor 12 are transmitted, as environmental information, to the system control apparatus 14 via the underwater cable 18 and the sensor communication feeder apparatus 13.

Further, the installation-type sensor 11 and the environmental sensor 12 operate by electric power supplied from the sensor communication feeder apparatus 13 via the underwater cable 18.

The sensor communication feeder apparatus 13 relays communication between each of the installation-type sensor 11 and the environmental sensor 12, and the system control apparatus 14. The sensor communication feeder apparatus 13 performs communication with each of the installation-type sensor 11 and the environmental sensor 12 via the underwater cable 18. Further, the sensor communication feeder apparatus 13 supplies electric power to each of the installation-type sensor 11 and the environmental sensor 12 via the underwater cable 18.

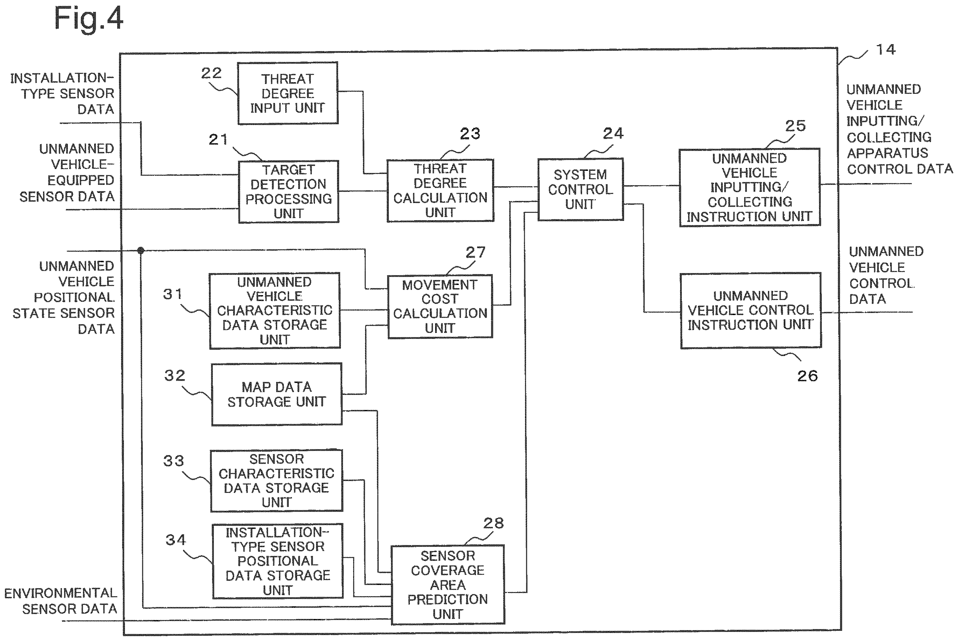

A configuration of the system control apparatus 14 is described. Fig. 4 is a block diagram illustrating the configuration of the system control apparatus 14 in the present example embodiment. The system control apparatus 14 has functions of controlling an operation of the sensor-equipped unmanned vehicle 15, based on sensor information and environmental information, and detecting an object being present in water.

The system control apparatus 14 includes a target detection processing unit 21, a threat degree input unit 22, a threat degree calculation unit 23, a system control unit 24, an unmanned vehicle inputting/collecting instruction unit 25, an unmanned vehicle control instruction unit 26, a movement cost calculation unit 27, and a sensor coverage area prediction unit 28. Further, the system control apparatus 14 further includes an unmanned vehicle characteristic data storage unit 31, a map data storage unit 32, a sensor characteristic data storage unit 33, and an installation-type sensor positional data storage unit 34.

The target detection processing unit 21 calculates a presence probability of an object being a target, namely, a search subject, based on sensor information transmitted from the installation-type sensor 11 and the sensor-equipped unmanned vehicle 15. The target detection processing unit 21 transmits the data about the calculated presence probability of the object as a target presence probability to the threat degree calculation unit 23.

The target detection processing unit 21 calculates a presence probability of an object in water, based on a signal/noise (S/N) ratio of a reception signal. The target detection processing unit 21 performs pulse compression processing, constant false alarm rate (CFAR) processing, and the like on data of the reception signal for each bearing, and calculates a presence probability of an object as a target presence probability. Further, detection of an object in water may be performed by sensing by a multi-stick method by a plurality of sensors. Further, detection of an object in water may be performed by a method of improving ultimate precision of position detection by performing data fusion on data received by each of a plurality of sensors.

Further, when the target detection processing unit 21 detects an object in water, information indicating that the object is detected is notified to a manager and the like of the monitoring system via a terminal device and a communication line connected to the system control apparatus 14.

The threat degree input unit 22 is an interface with which an operator and the like input a threat degree at each point as a user-defined threat degree. The threat degree is an indicator indicating importance for each point, and is set to a higher value at a point where intrusion of a third person or an unknown object is more likely to become a threat. The threat degree is, for example, set to be higher when an important facility is closer, and set to be lower when an important facility is farther. A point having a high value of a threat degree is, when an object or the like is present, a point with a high degree of priority of a response such as identification, removal, and destruction of the object. Further, a point having a low value of a threat degree is a point with a low degree of priority of a response such as identification of an object.

The threat degree calculation unit 23 calculates a threat degree at each point as an estimated threat degree, based on a user-defined threat degree input via the threat degree input unit 22 and data about a presence probability of a target received from the target detection processing unit 21.

The system control unit 24 has functions of determining a necessity for a search for an object at each point, and performing monitoring under water and a search for an object in water by controlling input to each point and a return of the sensor-equipped unmanned vehicle 15. The system control unit 24 calculates a search request value indicating a necessity for detection of and a search for an object and the like at each point under water. The system control unit 24 compares a preset reference value with the calculated search request value, and determines that a point having the calculated search request value equal to or greater than the reference value is a point that needs a search by the sensor-equipped unmanned vehicle 15 being a mobile sensor.

When the system control unit 24 determines that there is a point that needs a search, the system control unit 24 transmits information of the point that needs a search to the sensor-equipped unmanned vehicle 15. Information indicating a position of each point in the present example embodiment is constituted based on, for example, information of a latitude and a longitude of a point being a subject. Information of a depth may be included in the information about a point that needs a search. Further, information of each point may be set as information indicating a difference from a reference point set under water.

When there is a point that needs a search, the system control unit 24 instructs the unmanned vehicle inputting/collecting apparatus 16 to input the sensor-equipped unmanned vehicle 15 via the unmanned vehicle inputting/collecting instruction unit 25. Further, when the system control unit 24 determines that the search is completed, the system control unit 24 returns the sensor-equipped unmanned vehicle 15 to a position of the unmanned vehicle inputting/collecting apparatus 16.

The functions of the system control unit 24 in the present example embodiment of determining a point that needs a search by the sensor-equipped unmanned vehicle 15, based on a search request value calculated from a coverage area, and instructing inputting of the sensor-equipped unmanned vehicle 15 are equivalent to the control means 2 in the first example embodiment.

The unmanned vehicle inputting/collecting instruction unit 25 transmits, to the unmanned vehicle inputting/collecting apparatus 16, an instruction to input and collect the sensor-equipped unmanned vehicle 15, based on control by the system control unit 24. Further, an operation of collecting the sensor-equipped unmanned vehicle 15 in the unmanned vehicle inputting/collecting apparatus 16 is also referred to as lifting and recovering.

The unmanned vehicle control instruction unit 26 transmits information of a point of a movement destination to the sensor-equipped unmanned vehicle 15, based on the control by the system control unit 24. Further, the unmanned vehicle control instruction unit 26 transmits an instruction, to the sensor-equipped unmanned vehicle 15, to return, based on the control by the system control unit 24.

The movement cost calculation unit 27 calculates, as a movement cost, an indicator indicating a load required for a movement of the sensor-equipped unmanned vehicle 15. The movement cost becomes minimum at a point where the sensor-equipped unmanned vehicle 15 is present when the movement cost is calculated. Further, the movement cost has a value increasing as a point where the sensor-equipped unmanned vehicle 15 is present is located farther when the movement cost is calculated. The movement cost is positively infinity at a point that is located farther than a movable distance calculated from a remaining battery amount of the sensor-equipped unmanned vehicle 15 and cannot be reached. A movement cost to each point is calculated as data in map format for each sensor-equipped unmanned vehicle 15. The data in map format refers to data in which information indicating a position of each point and data at each point, such as a movement cost, are associated with each other.

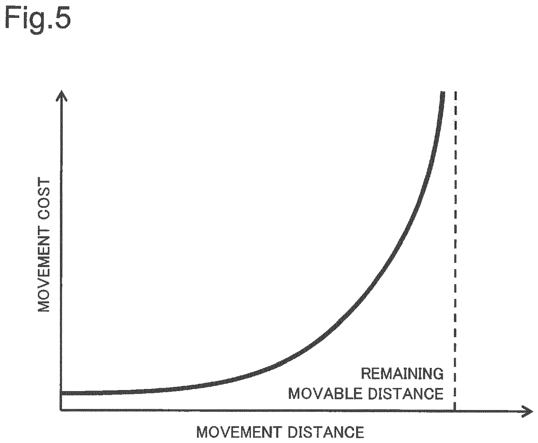

Fig. 5 is a graph schematically illustrating a relationship between a movement distance from a point where the sensor-equipped unmanned vehicle 15 is present to a movement destination and a movement cost. A broken line in Fig. 5 indicates a maximum value of a movable distance calculated based on a remaining battery amount, namely, a remaining movable distance.

The movement cost calculation unit 27 calculates an optimum movement path to each point, based on an A-star algorithm and the like, by using information of a tide and the like. The movement cost calculation unit 27 calculates a movement distance to each point, based on data about the optimum movement path, and calculates a movement cost in consideration of a remaining amount of a battery. On the assumption that the movement cost is C, the movement cost is calculated based on, for example, an equation of C = tan((d/(π/2))/D_{batt}) + Coffset. d represents a movement distance from a current point. Further, D_{batt} represents a distance in which a battery becomes empty. Furthermore, Coffset is an offset value for providing a sufficient allowance for a remaining amount of a battery. The movement cost is set, in the above-described equation, in such a way as to diverge infinitely in a distance in which a battery becomes empty.

The sensor coverage area prediction unit 28 has a function of calculating a coverage area being a region in which the installation-type sensor 11 and a sensor of the sensor-equipped unmanned vehicle 15 can perform a measurement. The sensor coverage area prediction unit 28 calculates a coverage area, based on positional information of the sensor-equipped unmanned vehicle 15, environmental information, map data, a sensor characteristic, and positional information of the installation-type sensor 11.

The sensor coverage area prediction unit 28 predicts intensity of a beam at each point with a position of the installation-type sensor 11 as a starting point, based on a water temperature and an electrical conductivity included in the environmental information, intensity of an output beam included in the sensor characteristic, and the like. When predicting intensity of a beam at each point, the sensor coverage area prediction unit 28 predicts a traveling direction of a beam emitted from the installation-type sensor 11 in consideration of reflection by a upheaval portion at a bottom of the water and the like, based on map data.

In a case where an object is present at each point, the sensor coverage area prediction unit 28 calculates intensity of a reverberating sound of the object with respect to the beam emitted from the installation-type sensor 11 when an echo reaches a position of the installation-type sensor 11. The sensor coverage area prediction unit 28 sets, as a coverage area, a range in which an echo having intensity sufficient for predicting a position and the like of the object reaches a position of the installation-type sensor 11. Data about the coverage area are calculated as data in map format. The data about the coverage area have a higher value at a point where the echo returning to the position of the installation-type sensor 11 is predicted to be stronger, and have a lower value at a point where the echo returning to the position of the installation-type sensor 11 is predicted to be weaker.

The sensor coverage area prediction unit 28 transmits information of the calculated coverage area as a sensor effective range to the system control unit 24. A value of data about a sensor effective range is higher near the installation-type sensor 11, and is smaller as the sensor effective range is located farther from the installation-type sensor 11 and detection of an object by the sensor becomes more difficult. The data about the sensor effective range are calculated as a value based on a terrain of a bottom of the water and an underwater environment. Further, the function of the sensor coverage area prediction unit 28 in the present example embodiment is equivalent to the coverage area prediction means 1 in the first example embodiment.

The unmanned vehicle characteristic data storage unit 31 stores characteristic data of the sensor-equipped unmanned vehicle 15. As the characteristic data of the sensor-equipped unmanned vehicle 15, for example, data about a cruising speed, a battery capacity, and a performance of a sensor of the sensor-equipped unmanned vehicle 15 are stored. The map data storage unit 32 stores map data including a terrain of a bottom of the water. The sensor characteristic data storage unit 33 stores data about a characteristic and a set value, such as a frequency, a transmission direction, and a transmission level of the beam of a sonar in the installation-type sensor 11. The installation-type sensor positional data storage unit 34 stores positional information of a point where the installation-type sensor 11 is installed. All or a part of data stored in the unmanned vehicle characteristic data storage unit 31, the map data storage unit 32, the sensor characteristic data storage unit 33, and the installation-type sensor positional data storage unit 34 may be read from another device via a communication line.

Processing in each unit of the system control apparatus 14 in the present example embodiment may be performed by executing a computer program in a central processing unit (CPU) of an information processing device. Further, when such a configuration is provided, the computer program that performs each processing is recorded in a hard disk drive, a semiconductor storage device, or another recording medium.

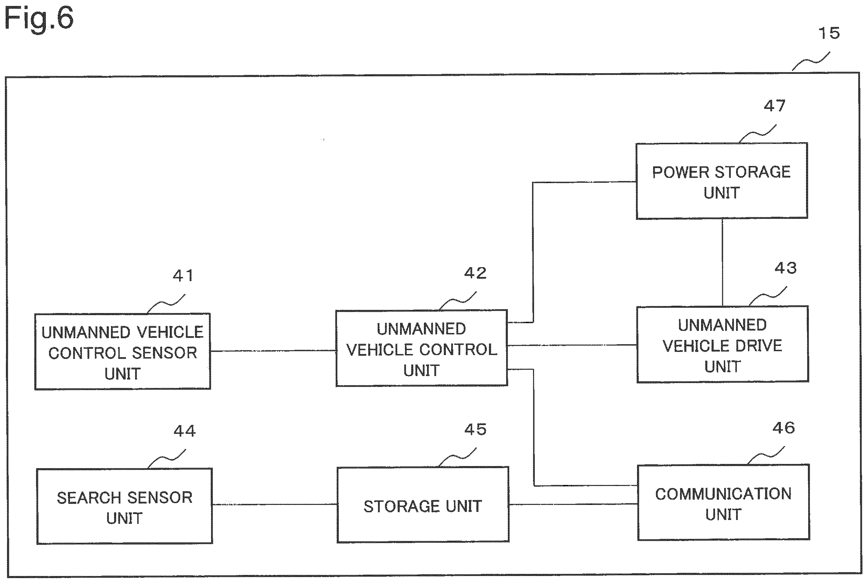

A configuration of the sensor-equipped unmanned vehicle 15 is described. Fig. 6 is a block diagram illustrating a configuration of the sensor-equipped unmanned vehicle 15 in the present example embodiment. The sensor-equipped unmanned vehicle 15 includes an unmanned vehicle control sensor unit 41, an unmanned vehicle control unit 42, an unmanned vehicle drive unit 43, a search sensor unit 44, a storage unit 45, a communication unit 46, and a power storage unit 47.

The sensor-equipped unmanned vehicle 15 in the present example embodiment is a mobile sensor that moves by autonomous navigation, based on control by the system control apparatus 14, and performs a search for an object in water in the unmanned vehicle control sensor unit 41. The sensor-equipped unmanned vehicle 15 is constituted as, for example, an underwater sailing type moving body that moves near a water surface where a wireless signal can be transmitted and received between the wireless communication apparatus 17 and the sensor-equipped unmanned vehicle 15. The sensor-equipped unmanned vehicle 15 may be a water-surface sailing type as long as the sensor-equipped unmanned vehicle 15 includes a sensor that can perform a measurement under water.

The sensor-equipped unmanned vehicle 15 may move and perform a search for an object in water at a depth at which a wireless signal propagating through the air does not directly reach. In a case where the sensor-equipped unmanned vehicle 15 moves and the like at a depth at which a wireless signal does not directly reach, the sensor-equipped unmanned vehicle 15 performs wireless communication by floating to a position in which wireless communication can be achieved or making a communication antenna to float near a water surface when performing the wireless communication with the wireless communication apparatus 17.

The unmanned vehicle control sensor unit 41 is a sensor that acquires data needed for a movement of the sensor-equipped unmanned vehicle 15. The unmanned vehicle control sensor unit 41 is constituted of a position measurement device, an inertial navigation device, an altimeter/depth indicator, an obstacle detection sensor, and the like. Data acquired by the unmanned vehicle control sensor unit 41 are transmitted to the unmanned vehicle control unit 42.

The unmanned vehicle control unit 42 has a function of performing the whole control of the sensor-equipped unmanned vehicle 15. The unmanned vehicle control unit 42 controls the unmanned vehicle drive unit 43, and moves the sensor-equipped unmanned vehicle 15 to a target position in which a search for an object in water is performed. Information of a target position is received from the system control apparatus 14 via the wireless communication apparatus 17. The unmanned vehicle control unit 42 controls the unmanned vehicle drive unit 43 in such a way that the sensor-equipped unmanned vehicle 15 reaches a target position by an autonomous navigation system, based on the data acquired by the unmanned vehicle control sensor unit 41 and the information of the target position. Further, the unmanned vehicle control unit 42 transmits measurement data of the search sensor unit 44 being temporarily stored in the storage unit 45 via the communication unit 46.

The unmanned vehicle drive unit 43 has a function as a power when the sensor-equipped unmanned vehicle 15 moves. The unmanned vehicle drive unit 43 propels the sensor-equipped unmanned vehicle 15 under water, based on control by the unmanned vehicle control unit 42, with electric power of the power storage unit 47 as a power source.

The search sensor unit 44 is a sensor that detects an object in water. An active sonar similar to that of the installation-type sensor 11 is used as the search sensor unit 44 in the present example embodiment. Data measured by the search sensor unit 44 are temporarily stored in the storage unit 45, and then transmitted by the unmanned vehicle control unit 42 via the communication unit 46.

The storage unit 45 stores the data measured by the search sensor unit 44. The communication unit 46 performs wireless communication with the wireless communication apparatus 17. The power storage unit 47 is a battery that supplies electric power serving as a power source when the sensor-equipped unmanned vehicle 15 is operated.

The unmanned vehicle inputting/collecting apparatus 16 has a function of managing the sensor-equipped unmanned vehicle 15. The unmanned vehicle inputting/collecting apparatus 16 inputs and collects the sensor-equipped unmanned vehicle 15, based on control by the system control apparatus 14.

When receiving, from the system control apparatus 14, an instruction to input the sensor-equipped unmanned vehicle 15, the unmanned vehicle inputting/collecting apparatus 16 releases a fixed state and brings the sensor-equipped unmanned vehicle 15 into a movable state. Positional information of a movement destination of the sensor-equipped unmanned vehicle 15 may be transmitted from the system control apparatus 14 to the sensor-equipped unmanned vehicle 15 via the unmanned vehicle inputting/collecting apparatus 16. Further, when receiving, from the system control apparatus 14, an instruction to collect the sensor-equipped unmanned vehicle 15, the unmanned vehicle inputting/collecting apparatus 16 brings the sensor-equipped unmanned vehicle 15 into a fixed state.

Further, when the sensor-equipped unmanned vehicle 15 is fixed, the unmanned vehicle inputting/collecting apparatus 16 performs charging of a battery of the power storage unit 47 by supplying electricity to the sensor-equipped unmanned vehicle 15.

The wireless communication apparatus 17 performs wireless communication with the sensor-equipped unmanned vehicle 15. The wireless communication apparatus 17 relays wireless communication between the system control apparatus 14 and the sensor-equipped unmanned vehicle 15.

The underwater cable 18 is included as a cable that transmits data and supplies electric power. The underwater cable 18 is constituted of, for example, a data transmission optical fiber and a feeding line formed around the optical fiber.

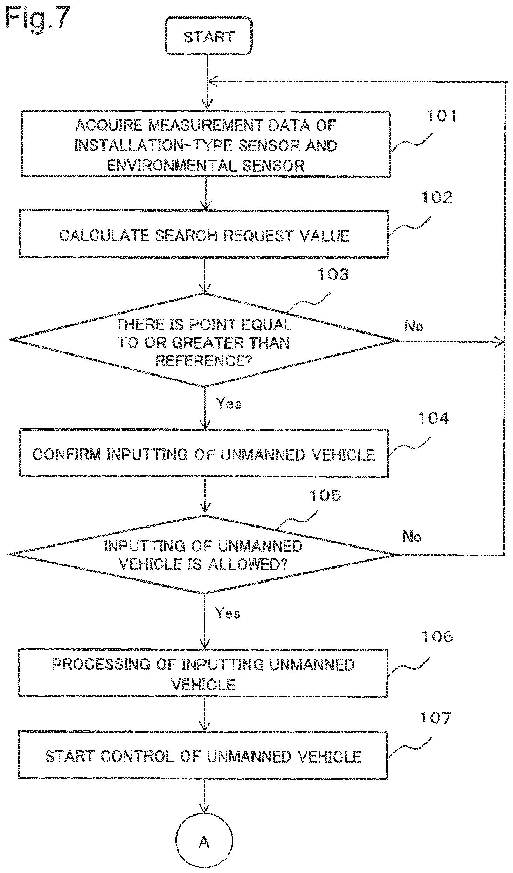

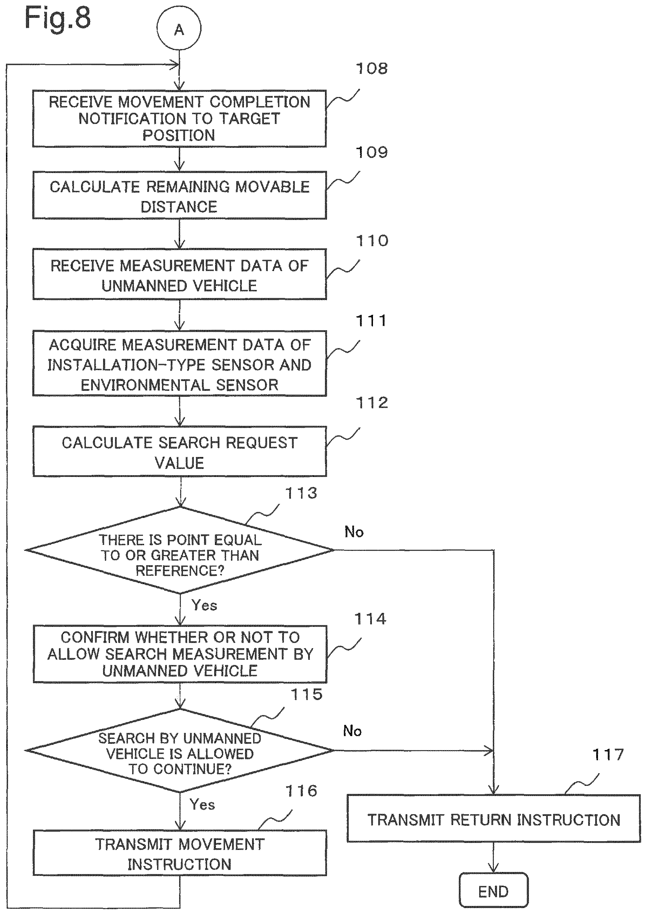

An operation of the monitoring system in the present example embodiment is described. Figs. 7 and 8 illustrate an outline of an operation flow of the system control apparatus 14 in the monitoring system in the present example embodiment.

When the monitoring system starts operating, the system control apparatus 14 acquires measurement data of the installation-type sensor 11 and the environmental sensor 12 (Step 101). The installation-type sensor 11 and the environmental sensor 12 each transmit the measurement data to the sensor communication feeder apparatus 13 via the underwater cable 18. The installation-type sensor 11 and the environmental sensor 12 operate by electric power supplied from the sensor communication feeder apparatus 13 via the underwater cable 18.

When receiving each piece of the measurement data from the installation-type sensor 11 and the environmental sensor 12, the sensor communication feeder apparatus 13 transmits the received measurement data to the system control apparatus 14. Sensor information received by the system control apparatus 14, namely, the measurement data by the installation-type sensor 11 are input to the target detection processing unit 21. Further, environmental information received by the system control apparatus 14, namely, the measurement data by the environmental sensor 12 are input to the sensor coverage area prediction unit 28.

Further, a user-defined threat degree is input to the threat degree input unit 22 by an operator and the like. The user-defined threat degree may be previously set and stored in the system control apparatus 14. Further, the user-defined threat degree may be input to the system control apparatus 14 via a communication line and the like. Data about the user-defined threat degree input to the system control apparatus 14 via the threat degree input unit 22 are transmitted to the threat degree calculation unit 23.

When acquiring the measurement data received from the installation-type sensor 11 and the environmental sensor 12, and the data about the user-defined threat degree, the system control apparatus 14 calculates a search request value (Step 102).

When the calculation of the search request value starts, the target detection processing unit 21 performs processing of calculating a presence probability of an object in water as target detection processing, based on the measurement data by the installation-type sensor 11. The target detection processing unit 21 transmits a result of the target detection processing to the threat degree calculation unit 23.

The threat degree calculation unit 23 calculates an estimated threat degree at each point, based on the data about the user-defined threat degree and the data about the presence probability of the target. The threat degree calculation unit 23 calculates an estimated threat degree by multiplying the target presence probability by the user-defined threat degree. The threat degree calculation unit 23 transmits the data about the calculated estimated threat degree to the system control unit 24.

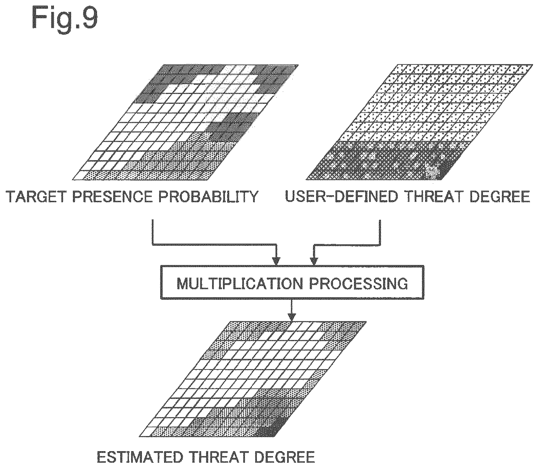

Fig. 9 schematically illustrates a data processing method when the system control apparatus 14 in the present example embodiment calculates an estimated threat degree. As illustrated in Fig. 9, the threat degree calculation unit 23 of the system control apparatus 14 calculates a predicted threat degree at each point by multiplying a target presence probability at each point by a user-defined threat degree.

Further, when calculation of a search request value starts, the movement cost calculation unit 27 reads, from the unmanned vehicle characteristic data storage unit 31, data about a cruising speed and a battery capacity of the power storage unit 47, as characteristic data of the sensor-equipped unmanned vehicle 15. Further, the movement cost calculation unit 27 reads map data including a terrain of a bottom of the water from the map data storage unit 32. The movement cost calculation unit 27 reads the characteristic data of the sensor-equipped unmanned vehicle 15 and the map data, and then calculates a movement cost of the sensor-equipped unmanned vehicle 15. When calculating the movement cost, the movement cost calculation unit 27 transmits the data about the calculated movement cost to the system control unit 24.

When receiving the measurement data of the environmental sensor 12, the sensor coverage area prediction unit 28 performs reading of the map data, sensor characteristic data, and positional data of the installation-type sensor 11. When performing reading of each piece of the data, the sensor coverage area prediction unit 28 performs reading of the map data from the map data storage unit 32. Further, the sensor coverage area prediction unit 28 performs reading of the data about the sensor characteristic of the installation-type sensor 11 from the sensor characteristic data storage unit 33. Further, the sensor coverage area prediction unit 28 performs reading of the positional information of the installation-type sensor 11 from the installation-type sensor positional data storage unit 34.

When performing reading of each piece of the data, the sensor coverage area prediction unit 28 predicts a coverage area of the installation-type sensor 11, based on each piece of the read data and the measurement data by the environmental sensor 12. The sensor coverage area prediction unit 28 transmits, as a sensor effective range, the predicted coverage area of the installation-type sensor 11, namely, data about a range in which the installation-type sensor 11 can detect an object in water to the system control unit 24.

When receiving the data about the estimated threat degree and the data about the sensor effective range, the system control unit 24 calculates a search effect, based on the data about the estimated threat degree and the data about the sensor effective range. The system control unit 24 calculates the search effect by dividing the estimated threat degree by the sensor effective range. The search effect is an indicator indicating whether a measurement by the sensor-equipped unmanned vehicle 15 is suitable. The search effect has a higher value at a point where a threat degree is higher and a measurement by the installation-type sensor 11 is more difficult.

When calculating the search effect, the system control unit 24 calculates a search request value, based on the search effect and the data about the movement cost. The system control unit 24 calculates the search request value by subtracting the movement cost from the search effect.

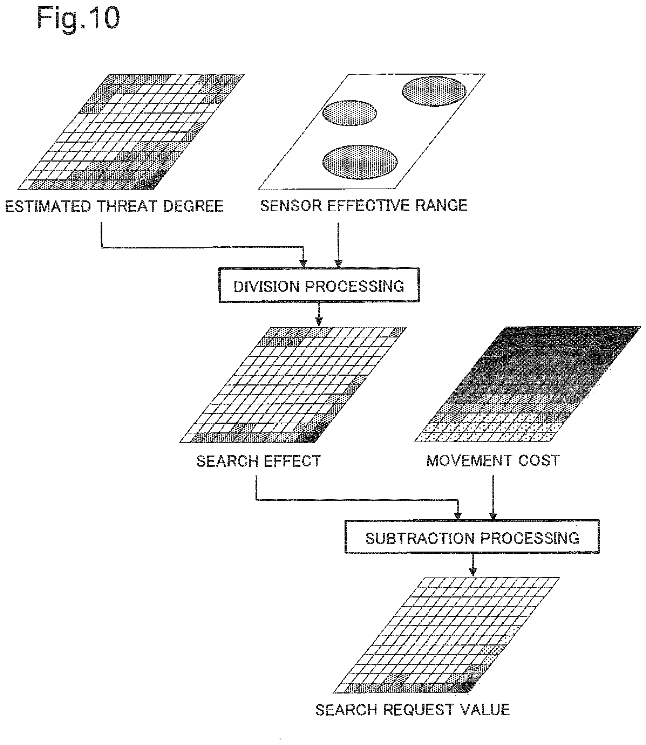

Fig. 10 schematically illustrates a data processing method when the system control apparatus 14 in the present example embodiment calculates a search request value. As illustrated in Fig. 10, the system control unit 24 of the system control apparatus 14 calculates a search effect at each point by dividing an estimated threat degree at each point by data about a sensor effective range. The system control unit 24 calculates a search request value at each point by subtracting a movement cost from the calculated search effect at each point.

When calculating the search request value, the system control unit 24 determines whether there is a place that needs a measurement by the sensor-equipped unmanned vehicle 15. For example, the system control unit 24 compares the search request value with a preset reference value, and determines that a place having the search request value equal to or greater than the reference value is a place that needs a measurement by the sensor-equipped unmanned vehicle 15.

When there are a plurality of places that need a search, a degree of priority may be set in such as a way to increase as a value of a search request value is greater. Further, a high degree of priority may be set to a region at a high density of places that need a measurement by the sensor-equipped unmanned vehicle 15.

When there is a point having a search request value equal to or greater than a reference value (Yes in Step 103), the system control unit 24 determines that there is a point that needs a search by the sensor-equipped unmanned vehicle 15. When determining that there is a point that needs a search by the sensor-equipped unmanned vehicle 15, the system control unit 24 performs confirmation with an operator and the like whether or not to allow inputting of the sensor-equipped unmanned vehicle 15 (Step 104). The system control unit 24 outputs, to a terminal device and the like connected to the system control apparatus 14, information of confirmation whether or not to allow inputting of the sensor-equipped unmanned vehicle 15, and receives an answer from the operator and the like.

When inputting of the sensor-equipped unmanned vehicle 15 is allowed (Yes in Step 105), the system control unit 24 performs processing of inputting the sensor-equipped unmanned vehicle 15 (Step 106). The system control unit 24 starts the processing of inputting the sensor-equipped unmanned vehicle 15, and then transmits an instruction to input the sensor-equipped unmanned vehicle 15 to the unmanned vehicle inputting/collecting instruction unit 25. When receiving the instruction to input the sensor-equipped unmanned vehicle 15, the unmanned vehicle inputting/collecting instruction unit 25 transmits an instruction to input the sensor-equipped unmanned vehicle 15 to the unmanned vehicle inputting/collecting apparatus 16.

A determination of inputting of the sensor-equipped unmanned vehicle 15 may be automatically performed without performing confirmation with the operator and the like. In a case where the determination of inputting of the sensor-equipped unmanned vehicle 15 is automatically performed, when the system control unit 24 determines that there is a point that needs a search by the sensor-equipped unmanned vehicle 15, the system control unit 24 determines that inputting of the sensor-equipped unmanned vehicle 15 is needed, and starts control of the inputting.

When receiving the instruction to input the sensor-equipped unmanned vehicle 15, the unmanned vehicle inputting/collecting apparatus 16 releases fixing of the sensor-equipped unmanned vehicle 15, and brings the sensor-equipped unmanned vehicle 15 into a movable state.

When performing the processing of inputting the sensor-equipped unmanned vehicle 15, the system control unit 24 starts control of the sensor-equipped unmanned vehicle 15 (Step 107). When starting control of the inputting of the sensor-equipped unmanned vehicle 15, the system control unit 24 transmits a target position of a movement of the sensor-equipped unmanned vehicle 15, namely, information of a point that needs a measurement by the sensor-equipped unmanned vehicle 15 to the unmanned vehicle control instruction unit 26.

When receiving the information of a measurement position of the sensor-equipped unmanned vehicle 15, the unmanned vehicle control instruction unit 26 transmits the information of the target position of the sensor-equipped unmanned vehicle 15 to the wireless communication apparatus 17. When receiving the information of the target position of the sensor-equipped unmanned vehicle 15, the wireless communication apparatus 17 transmits the information of the target position to the sensor-equipped unmanned vehicle 15.

In Step 103, when there is no point having a search request value equal to or greater than a reference value (No in Step 103), the system control apparatus 14 repeats the operation again from the operation of acquiring each piece of measurement data in Step 101.

Further, in Step 105, when the inputting of the sensor-equipped unmanned vehicle 15 is not allowed (No in Step 105), the system control apparatus 14 repeats the operation again from the operation of acquiring each piece of measurement data in Step 101. When the inputting of the sensor-equipped unmanned vehicle 15 is not allowed in Step 105, the system control apparatus 14 may terminate the operation.

When receiving the information of the target position of the movement, the sensor-equipped unmanned vehicle 15 moves by autonomous navigation to a point associated with the information of the target position. When the target position, namely, the point where a measurement is to be performed is reached, the unmanned vehicle control unit 42 of the sensor-equipped unmanned vehicle 15 transmits information indicating that the target position is reached as a movement completion notification to the wireless communication apparatus 17 via the communication unit 46. The unmanned vehicle control unit 42 adds positional information of the sensor-equipped unmanned vehicle 15 and information of a battery remaining amount to the movement completion notification, and transmits the movement completion notification. When receiving the movement completion notification from the sensor-equipped unmanned vehicle 15, the wireless communication apparatus 17 transmits the received movement completion notification to the system control apparatus 14.

The system control apparatus 14 receives the movement completion notification indicating that the sensor-equipped unmanned vehicle 15 reaches the target position, via the wireless communication apparatus 17 (Step 108). The movement completion notification received by the system control apparatus 14 is input to the movement cost calculation unit 27.

When receiving the positional information of the sensor-equipped unmanned vehicle 15 and the like as the movement completion notification, the movement cost calculation unit 27 calculates a remaining movable distance of the sensor-equipped unmanned vehicle 15, based on the positional information of the sensor-equipped unmanned vehicle 15 and the remaining battery amount and the like (Step 109). When calculating the movable distance, the movement cost calculation unit 27 generates data about a movement cost at each point, based on the movable distance, and transmits the data about the movement cost to the system control unit 24.

When a point corresponding to the target position is reached, the search sensor unit 44 of the sensor-equipped unmanned vehicle 15 performs a measurement by a sonar. A measurement result by the sonar of the search sensor unit 44 is temporarily stored in the storage unit 45.

When the unmanned vehicle control unit 42 of the sensor-equipped unmanned vehicle 15 is brought into a state where the unmanned vehicle control unit 42 can perform wireless communication with the wireless communication apparatus 17, the unmanned vehicle control unit 42 transmits the measurement data stored in the storage unit 45 to the wireless communication apparatus 17 via the communication unit 46.

When receiving the measurement data of the sensor-equipped unmanned vehicle 15, the wireless communication apparatus 17 transmits the measurement data to the system control apparatus 14. The system control apparatus 14 receives the measurement data of the sensor-equipped unmanned vehicle 15 from the wireless communication apparatus 17 (Step 110). The measurement data of the sensor-equipped unmanned vehicle 15 received by the system control apparatus 14 are input to the target detection processing unit 21. Further, the system control apparatus 14 acquires measurement data of the installation-type sensor 11 and the environmental sensor 12 (Step 111).

When receiving the measurement data of the installation-type sensor 11 and the sensor-equipped unmanned vehicle 15, the target detection processing unit 21 of the system control apparatus 14 calculates a target presence probability, based on the measurement data of the installation-type sensor 11 and the sensor-equipped unmanned vehicle 15. When calculating the target presence probability, the target detection processing unit 21 transmits data about the calculated target presence probability to the threat degree calculation unit 23.

When receiving the data about the target presence probability, the threat degree calculation unit 23 calculates an estimated threat degree at each point, based on a user-defined threat degree and the data about the target presence probability. The threat degree calculation unit 23 transmits data about the calculated estimated threat degree to the system control unit 24.

Further, the sensor coverage area prediction unit 28 predicts a coverage area of the installation-type sensor 11 and the search sensor unit 44 of the sensor-equipped unmanned vehicle 15, based on the measurement data of the environmental sensor 12 and the sensor-equipped unmanned vehicle 15, positional information, map data, and sensor characteristic data. The sensor coverage area prediction unit 28 transmits data about the predicted coverage area as data about a sensor effective range to the system control unit 24.

When receiving the data about the estimated threat degree and the data about the target presence probability, the system control unit 24 calculates a search effect, based on the data about the estimated threat degree and the target presence probability.

When calculating the search effect, the system control unit 24 calculates a search request value, based on the search effect and the data about the movement cost (Step 112).

When calculating the search request value, the system control unit 24 determines whether there is a place that needs a measurement by the sensor-equipped unmanned vehicle 15. The system control unit 24 compares the search request value with a preset reference value, and determines that a place having the search request value equal to or greater than the reference value is a place that needs a measurement by the sensor-equipped unmanned vehicle 15.

When a point having a search request value equal to or greater than a reference value is present (Yes in Step 113), the system control unit 24 determines that a search by the sensor-equipped unmanned vehicle 15 needs to continue. When determining that the search needs to continue, the system control unit 24 performs confirmation with the operator and the like whether or not to allow the search by the sensor-equipped unmanned vehicle 15 to continue (Step 114). The system control unit 24 outputs, to the terminal device and the like connected to the system control apparatus 14, information of confirmation whether or not to allow the search by the sensor-equipped unmanned vehicle 15 to continue, and receives an answer from the operator and the like.

When the search is allowed to continue (Yes in Step 115), the system control unit 24 transmits information of a target position of the search by the sensor-equipped unmanned vehicle 15 to the unmanned vehicle control instruction unit 26. When receiving the information of the target position of the search, the unmanned vehicle control instruction unit 26 transmits the information of the target position and a movement instruction to the target position to the wireless communication apparatus 17 (Step 116). When receiving the information of the target position of the search and the movement instruction, the wireless communication apparatus 17 transmits the received information of the target position and the movement instruction to the sensor-equipped unmanned vehicle 15.

A determination whether to continue the search by the sensor-equipped unmanned vehicle 15 may be automatically performed without performing confirmation with the operator and the like. In a case where the determination whether to continue the search by the sensor-equipped unmanned vehicle 15 is automatically performed, when the system control unit 24 determines that a point that needs the search remains, the system control unit 24 determines that the search by the sensor-equipped unmanned vehicle 15 needs to continue, and controls a movement of the sensor-equipped unmanned vehicle 15.

The sensor-equipped unmanned vehicle 15 that receives the information of the target position of the search and the movement instruction starts moving, based on the information of the target position, and performs an operation of a measurement by the search sensor unit 204 when reaching the target position. When reaching the target position, the sensor-equipped unmanned vehicle 15 transmits a movement completion notification to the system control apparatus 14 via the wireless communication apparatus 17. The system control apparatus 14 that receives the movement completion notification performs the operation from Step 108.

When a point having a search request value equal to or greater than a reference value is not present (No in Step 113), the system control unit 24 determines that the search by the sensor-equipped unmanned vehicle 15 is completed. When determining that the search is completed, the system control unit 24 transmits, to the unmanned vehicle control instruction unit 26, a return instruction to return the sensor-equipped unmanned vehicle 15 to the unmanned vehicle inputting/collecting apparatus 16. When receiving the return instruction, the unmanned vehicle control instruction unit 26 transmits the return instruction to the wireless communication apparatus 17 of the unmanned vehicle inputting/collecting apparatus 16 (Step 117). When receiving the return instruction, the wireless communication apparatus 17 transmits the received return instruction to the sensor-equipped unmanned vehicle 15. When receiving the return instruction, the sensor-equipped unmanned vehicle 15 moves to a position of the unmanned vehicle inputting/collecting apparatus 16 by autonomous navigation. The sensor-equipped unmanned vehicle 15 that moves to the position of the unmanned vehicle inputting/collecting apparatus 16 is fixed by the unmanned vehicle inputting/collecting apparatus 16, and an operation of supplying electricity and the like is performed.

Further, when the search is not allowed to continue (No in Step 115), the system control unit 24 determines that the search by the sensor-equipped unmanned vehicle 15 is completed, and transmits a return instruction to the unmanned vehicle control instruction unit 26. When receiving the return instruction, the unmanned vehicle control instruction unit 26 transmits the return instruction to the sensor-equipped unmanned vehicle 15 via the wireless communication apparatus 17 of the unmanned vehicle inputting/collecting apparatus 16 (Step 117). When receiving the return instruction, the sensor-equipped unmanned vehicle 15 moves to a position of the unmanned vehicle inputting/collecting apparatus 16 by autonomous navigation. The sensor-equipped unmanned vehicle 15 that moves to the position of the unmanned vehicle inputting/collecting apparatus 16 is fixed by the unmanned vehicle inputting/collecting apparatus 16, and an operation of supplying electricity and the like is performed.

The system control apparatus 14 in the monitoring system in the present example embodiment predicts a coverage area of the installation-type sensor 11 in consideration of a change in sensor performance of the installation-type sensor 11, based on a measurement result of an environment by the environmental sensor 12. Thus, the monitoring system in the present example embodiment can predict a coverage area of the installation-type sensor 11 in consideration of an environmental fluctuation even when an environment such as a water temperature fluctuates and sensor performance changes.

Further, the system control apparatus 14 determines a position in which a measurement by a mobile sensor, namely, the sensor-equipped unmanned vehicle 15 is performed, based on a prediction result of the installation-type sensor 11 and a presence probability, a threat degree, and a movement cost of an object being a target for detection. Thus, the system control apparatus 14 can accurately determine a point suitable for searching for an object by a mobile sensor among points where detection for an object by the installation-type sensor 11 is difficult. In other words, the monitoring system in the present example embodiment can perform a search for an object by a mobile sensor even when detection by the installation-type sensor 11 is difficult at a point having greater importance of monitoring. As a result, the monitoring system in the present example embodiment can continue monitoring even when an environmental change causes a fluctuation in a coverage area of the sensor.

When there are a plurality of points determined that a search is needed from a search request value in a case where the monitoring system in the second example embodiment includes a plurality of the sensor-equipped unmanned vehicles 15, the plurality of sensor-equipped unmanned vehicles 15 may be simultaneously input to the respective points. Detection can be more reliably performed by simultaneously performing a search for a plurality of points in the plurality of sensor-equipped unmanned vehicles 15 even when a movement speed of an object in water is fast.

Further, when the plurality of sensor-equipped unmanned vehicles 15 are input to the plurality of respective points, a search at the plurality of points may be performed while some of the sensor-equipped unmanned vehicles 15 are fixed to a specific point and the other sensor-equipped unmanned vehicle 15 moves. With such a configuration, a search at a plurality of points can be performed while a point having greater importance is continuously searched, and thus an object in water can be more reliably detected.

Further, in a configuration in which the plurality of sensor-equipped unmanned vehicles 15 are provided, communication with the wireless communication apparatus 17 may be performed by relaying communication between the sensor-equipped unmanned vehicles 15. With such a configuration, the sensor-equipped unmanned vehicle 15 being present at a point farther from the wireless communication apparatus 17 can also perform stable communication.

In the monitoring system in the second example embodiment, the sensor-equipped unmanned vehicle 15 and the system control apparatus 14 perform wireless communication via the wireless communication apparatus 17. Instead of such a configuration, the sensor-equipped unmanned vehicle 15 may perform communication with the system control apparatus 14 via a communication facility installed under water. For example, the sensor-equipped unmanned vehicle 15 may be configured to perform communication with an underwater communication device installed in the installation-type sensor 11 and the environmental sensor 12 by an acoustic signal, a wireless signal, or an optical signal, and the communication device may be configured to perform communication with the system control apparatus 14 via the underwater cable 18. Further, the underwater communication device that performs communication with the sensor-equipped unmanned vehicle 15 may be installed in a position different from that of the installation-type sensor 11 and the environmental sensor 12.

The sensor-equipped unmanned vehicle 15 in the second example embodiment may be a flying-type moving body. When a flying-type sensor-equipped unmanned vehicle 15 is used, a search under water is performed by inputting the search sensor unit 44 into the water in a target position in which the search is performed.

The monitoring system in the second example embodiment performs detection of an object in water, but may be a configuration to perform detection of an object on land. In such a configuration, for example, an optical camera can be used as an installation-type sensor and a mobile sensor. Further, in a configuration in which an optical camera is used as a sensor, for example, a visibility meter is used as an environmental sensor. For example, a mobile sensor moves in a state of being provided on a vehicle or a flying object.

While the invention has been particularly shown and described with reference to exemplary example embodiments thereof, the invention is not limited to these example embodiments. It will be understood by those of ordinary skill in the art that various changes in form and details may be made therein without departing from the scope of the present invention as defined by the claims.

### [Reference signs List]

- 1: Coverage area prediction means
- 2: Control means
- 11: Installation-type sensor
- 12: Environmental sensor
- 13: Sensor communication feeder apparatus
- 14: System control apparatus
- 15: Sensor-equipped unmanned vehicle
- 16: Unmanned vehicle inputting/collecting apparatus
- 17: Wireless communication apparatus
- 18: Underwater cable
- 21: Target detection processing unit
- 22: Threat degree input unit
- 23: Threat degree calculation unit
- 24: System control unit
- 25: Unmanned vehicle inputting/collecting instruction unit
- 26: Unmanned vehicle control instruction unit
- 27: Movement cost calculation unit
- 28: Sensor coverage area prediction unit
- 31: Unmanned vehicle characteristic data storage unit
- 32: Map data storage unit
- 33: Sensor characteristic data storage unit
- 34: Installation-type sensor positional data storage unit
- 41: Unmanned vehicle control sensor unit
- 42: Unmanned vehicle control unit
- 43: Unmanned vehicle drive unit
- 44: Search sensor unit
- 45: Storage unit
- 46: Communication unit
- 47: Power storage unit

## Claims

1. A control apparatus (14,24) comprising:
coverage area prediction means (1) for predicting, based on a measurement result of an environment of a region in which an object is to be detected, a coverage area being a range in which an installation-type object detecting sensor (11) can perform a measurement; and
control means (2) for determining a position in which a mobile object detecting sensor (15) is to be disposed, based on a movement cost being an indicator indicating a load of a movement of the mobile object detecting sensor from a current position, the coverage area predicted by the coverage area prediction means (1) and a probability that the object is present, and controlling the mobile sensor.

2. The control apparatus according to claim 1, wherein
the control means (2) compares an indicator calculated, based on the movement cost, the coverage area, and a probability that the object is present, with a reference value, and determines whether or not a measurement by the mobile object detecting sensor is necessary.

3. The control apparatus according to claim 1 or 2, wherein,
when the control means (2) determines that there are a plurality of points that need a measurement by the mobile object detecting sensor, the control means (2) determines, based on the movement cost, whether or not to allow a movement, after a measurement is completed at a first point that needs a measurement, to a second point being a point that needs a measurement different from the first point.

4. The control apparatus according to any of claims 1 to 3, further comprising:
movement cost calculation means (27) for calculating the movement cost, based on a remaining quantity of a power source of the mobile object detecting sensor.

5. A monitoring system, comprising:
an environmental sensor (12) that measures an environment of a region in which an object is to be detected;
a plurality of installation-type object detecting sensors (11);
a vehicle (15) including an object detecting sensor and drive means for moving by autonomous navigation; and the monitoring system further comprising the control apparatus (14,24) according to any of claims 1 to 4, wherein
the coverage area prediction means (1) of the control apparatus predicts the coverage area of the installation-type object detecting sensor (11), based on a measurement result of the environmental sensor, and
the control means (2) of the control apparatus determines a position in which the vehicle (15) is to be disposed as the mobile object detecting sensor, based on a result being predicted by the coverage area prediction means (1) .

6. The monitoring system according to claim 5, further comprising:
a communication feeder apparatus (13) that includes communication means for relaying communication between the environmental sensor and the installation-type object detecting sensor (11), and the control apparatus, and feeder means for supplying electric power to the environmental sensor and the installation-type object detecting sensor (11).

7. The monitoring system according to claim 5 or 6, further comprising:
an inputting/lifting-and-recovering apparatus (16) that includes means for inputting, and lifting and recovering the vehicle (15), and means for supplying electricity to the vehicle (15), wherein
the vehicle (15) is input from the inputting/lifting-and-recovering apparatus (16), and returns to the inputting/lifting-and-recovering apparatus (16), based on control by the control apparatus.

8. A monitoring method, comprising:
predicting, based on a measurement result of an environment of a region in which an object is to be detected, a coverage area being a range in which an installation-type object detecting sensor (11) can perform a measurement; and
determining a position in which a mobile object detecting
sensor (15) is to be disposed, based on a movement cost being an indicator indicating a load of a movement of the mobile object detecting sensor from a current position, the predicted coverage area and a probability that the object is present, and controlling the mobile sensor.

9. The monitoring method according to claim 8, further comprising:
comparing an indicator calculated, based on the movement cost, the coverage area, and a probability that the object is present, with a reference value, and determining whether or not a measurement by the mobile object detecting sensor is necessary.

10. The monitoring method according to claim 8 or 9, further comprising:
when determining that there are a plurality of points that need a measurement by the mobile object detecting sensor, determining, based on the movement cost, whether or not to allow a movement, after a measurement is completed at a first point that needs a measurement, to a second point being a point that needs a measurement different from the first point.

11. The monitoring method according to any of claims 8 to 10, further comprising
calculating the movement cost, based on a remaining quantity of a power source of the mobile object detecting sensor.

12. A control program for causing a computer to execute:
coverage area prediction processing of predicting, based on a measurement result of an environment of a region in which an object is to be detected, a coverage area being a range in which an installation-type object detecting sensor (11) can perform a measurement; and
control processing of determining a position in which a mobile object detecting sensor (15) is to be disposed, based on a movement cost being an indicator indicating a load of a movement of the mobile sensor from a current position, the coverage area predicted in the coverage area prediction processing and a probability that the object is present, and controlling the mobile object detecting sensor.

## Patentansprüche

1. Steuervorrichtung (14, 24), umfassend:
eine Abdeckungsgebiet-Vorhersageeinrichtung (1) zum Vorhersagen, basierend auf einem Messergebnis einer Umgebung eines Gebiets in welchem ein Objekt zu erfassen ist, eines Abdeckungsgebiets, das ein Bereich ist, in welchem ein Objekterfassungssensor vom Installationstyp (11) eine Messung durchführen kann; und
eine Steuereinrichtung (2) zum Bestimmen einer Position, bei welcher ein mobiler Objekterfassungssensor (15) anzuordnen ist, basierend auf einem Bewegungsaufwand, der ein Indikator ist, der eine Belastung einer Bewegung des mobilen Objekterfassungssensors von einer aktuellen Position anzeigt, dem durch die Abdeckungsgebiet-Vorhersageeinrichtung (1) vorhergesagten Abdeckungsgebiet und einer Wahrscheinlichkeit, dass das Objekt vorhanden ist, und zum Steuern des mobilen Sensors.

2. Steuervorrichtung nach Anspruch 1, wobei
die Steuereinrichtung (2) einen basierend auf dem Bewegungsaufwand, dem Abdeckungsgebiet und einer Wahrscheinlichkeit, dass das Objekt vorhanden ist, berechneten Indikator mit einem Referenzwert vergleicht und bestimmt, ob eine Messung durch den mobilen Objekterfassungssensor nötig ist oder nicht.

3. Steuervorrichtung nach Anspruch 1 oder 2, wobei
wenn die Steuereinrichtung (2) bestimmt, dass es eine Vielzahl von Stellen gibt, die eine Messung durch den mobilen Objekterfassungssensor benötigen, die Steuereinrichtung (2) basierend auf dem Bewegungsaufwand bestimmt, ob, nachdem eine Messung bei einer ersten Stelle beendet ist, die eine Messung benötigt, eine Bewegung zu einer zweiten Stelle, die eine von der ersten Stelle unterschiedliche Stelle ist, die eine Messung benötigt, zuzulassen ist oder nicht.

4. Steuervorrichtung nach einem der Ansprüche 1 bis 3, die weiterhin folgendes umfasst:
eine Bewegungsaufwands-Berechnungseinrichtung (27) zum Berechnen des Bewegungsaufwands basierend auf einer Restmenge einer Leistungsquelle des mobilen Objekterfassungssensors.

5. Überwachungssystem, umfassend:
einen Umgebungssensor (12), der eine Umgebung eines Gebiets misst, in welchem ein Objekt zu erfassen ist;
eine Vielzahl von Objekterfassungssensoren vom Installationstyp (11);
ein Fahrzeug (15), das einen Objekterfassungssensor und eine Antriebseinrichtung zum Bewegen durch autonome Navigation enthält; und
wobei das Überwachungssystem weiterhin folgendes umfasst:
die Steuervorrichtung (14, 24) nach einem der Ansprüche 1 bis 4, wobei
die Abdeckungsgebiet-Vorhersageeinrichtung (1) der Steuervorrichtung das Abdeckungsgebiet des Objekterfassungssensors vom Installationstyp (11) basierend auf einem Messergebnis des Umgebungssensors vorhersagt, und
die Steuereinrichtung (2) der Steuervorrichtung eine Position, bei welcher das Fahrzeug (15) als der mobile Objekterfassungssensor anzuordnen ist, basierend auf einem Ergebnis bestimmt, das durch die Abdeckungsgebiets-Vorhersageeinrichtung (1) vorhergesagt wird.

6. Überwachungssystem nach Anspruch 5, das weiterhin folgendes umfasst:
eine Kommunikationszuführungsleitungsvorrichtung (13), die eine Kommunikationseinrichtung zum Weiterleiten von Kommunikation zwischen dem Umgebungssensor und dem Objekterfassungssensor von Installationstyp (11), und der Steuervorrichtung enthält, und eine Zuführungsleitungseinrichtung zum Zuführen elektrischer Energie zu dem Umgebungssensor und dem Objekterfassungssensor von Installationstyp (11).

7. Überwachungssystem nach Anspruch 5 oder 6, das weiterhin folgendes umfasst:
eine Eingabe/Heraushebungs-und-Einziehungs-Vorrichtung (16), die einen Einrichtung zum Eingeben, und Herausheben und Einziehen des Fahrzeugs (15) enthält, und eine Einrichtung zum Zuführen von Elektrizität zum Fahrzeug (15), wobei
das Fahrzeug (15) von der Eingabe/Heraushebungs-und-Einziehungs-Vorrichtung (16) eingegeben wird und basierend auf eine Steuerung der Steuervorrichtung zur Eingabe/Heraushebungs-und-Einziehungs-Vorrichtung (16) zurückkehrt.

8. Überwachungsverfahren, umfassend:
Vorhersagen, basierend auf einem Messergebnis einer Umgebung eines Gebiets, in welchem ein Objekt zu erfassen ist, eines Abdeckungsgebiets, das ein Bereich ist, in welchem ein Objekterfassungssensor vom Installationstyp (11) eine Messung durchführen kann; und
Bestimmen einer Position, bei welcher ein mobiler Objekterfassungssensor (15) anzuordnen ist, basierend auf einem Bewegungsaufwand, der ein Indikator ist, der eine Belastung einer Bewegung des mobilen Objekterfassungssensors von einer aktuellen Position anzeigt, dem vorhergesagten Abdeckungsgebiet und einer Wahrscheinlichkeit, dass das Objekt vorhanden ist, und Steuern des mobilen Sensors.

9. Überwachungsverfahren nach Anspruch 8, das weiterhin folgendes umfasst:
Vergleichen eines basierend auf dem Bewegungsaufwand, dem Abdeckungsgebiet und einer Wahrscheinlichkeit, dass das Objekt vorhanden ist, berechneten Indikators mit einem Referenzwert und Bestimmen, ob eine Messung durch den mobilen Objekterfassungssensor nötig ist oder nicht.

10. Überwachungsverfahren nach Anspruch 8 oder 9, das weiterhin folgendes umfasst:
wenn bestimmt wird, dass es eine Vielzahl von Stellen gibt, die eine Messung durch den mobilen Objekterfassungssensor benötigen, basierend auf dem Bewegungsaufwand Bestimmen, ob, nachdem eine Messung bei einer ersten Stelle beendet ist, die eine Messung benötigt, eine Bewegung zu einer zweiten Stelle, die eine von der ersten Stelle unterschiedliche Stelle ist, die eine Messung benötigt, zuzulassen ist oder nicht.

11. Überwachungsverfahren nach einem der Ansprüche 8 bis 10, das weiterhin folgendes umfasst:
Berechnen des Bewegungsaufwands basierend auf einer Restmenge einer Leistungsquelle des mobilen Objekterfassungssensors.

12. Steuerprogramm zum Veranlassen, dass ein Computer folgendes ausführt:
eine Abdeckungsgebiet-Vorhersageverarbeitung zum Vorhersagen, basierend auf einem Messergebnis einer Umgebung eines Gebiets, in welchem ein Objekt zu erfassen ist, eines Abdeckungsgebiets, das ein Bereich ist, in welchem ein Objekterfassungssensor vom Installationstyp (11) eine Messung durchführen kann; und
eine Steuerverarbeitung zum Bestimmen einer Position, bei welcher ein mobiler Objekterfassungssensor (15) anzuordnen ist, basierend auf einem Bewegungsaufwand, der ein Indikator ist, der eine Belastung einer Bewegung des mobilen Sensors von einer aktuellen Position anzeigt, dem bei der Abdeckungsgebiets-Vorhersageverarbeitung vorhergesagten Abdeckungsgebiet und einer Wahrscheinlichkeit, dass das Objekt vorhanden ist, und Steuern des mobilen Objekterfassungssensors.

## Revendications

1. Appareil de commande (14, 24), comprenant :
un moyen de prédiction de zone de couverture (1) pour prédire, sur la base d'un résultat de mesure d'un environnement d'une région dans laquelle un objet doit être détecté, une zone de couverture qui est une plage dans laquelle un capteur de détection d'objet de type installation (11) peut réaliser une mesure ; et
un moyen de commande (2) pour déterminer une position dans laquelle un capteur de détection d'objet mobile (15) doit être disposé, sur la base d'un coût de déplacement qui est un indicateur indiquant une charge d'un déplacement du capteur de détection d'objet mobile à partir d'une position actuelle, de la zone de couverture prédite par le moyen de prédiction de zone de couverture (1) et d'une probabilité que l'objet soit présent, et pour commander le capteur mobile.

2. Appareil de commande selon la revendication 1, dans lequel le moyen de commande (2) compare un indicateur calculé sur la base du coût de déplacement, de la zone de couverture et d'une probabilité que l'objet soit présent, avec une valeur de référence, et détermine si une mesure par le capteur de détection d'objet mobile est nécessaire ou non.

3. Appareil de commande selon la revendication 1 ou 2, dans lequel,
lorsque le moyen de commande (2) détermine qu'il y a une pluralité de points qui nécessitent une mesure par le capteur de détection d'objet mobile, le moyen de commande (2) détermine, sur la base du coût de déplacement, s'il faut ou non permettre un déplacement, après qu'une mesure a été achevée au niveau d'un premier point qui nécessite une mesure, vers un deuxième point qui est un point qui nécessite une mesure différente du premier point.

4. Appareil de commande selon l'une quelconque des revendications 1 à 3, comprenant en outre :
un moyen de calcul de coût de déplacement (27) pour calculer le coût de déplacement, sur la base d'une quantité restante d'une source de puissance du capteur de détection d'objet mobile.

5. Système de surveillance, comprenant :
un capteur environnemental (12) qui mesure un environnement d'une région dans laquelle un objet doit être détecté ;
une pluralité de capteurs de détection d'objet de type installation (11) ;
un véhicule (15) comportant un capteur de détection d'objet et un moyen d'entraînement pour se déplacer par navigation autonome ; et le système de surveillance comprenant en outre
l'appareil de commande (14, 24) selon l'une quelconque des revendications 1 à 4, dans lequel
le moyen de prédiction de zone de couverture (1) de l'appareil de commande prédit la zone de couverture du capteur de détection d'objet de type installation (11), sur la base d'un résultat de mesure du capteur environnemental, et
le moyen de commande (2) de l'appareil de commande détermine une position dans laquelle le véhicule (15) doit être disposé en tant que capteur de détection d'objet mobile, sur la base d'un résultat qui est prédit par le moyen de prédiction de zone de couverture (1) .

6. Système de surveillance selon la revendication 5, comprenant en outre :
un appareil d'alimentation en communication (13) qui comporte un moyen de communication pour relayer la communication entre le capteur environnemental et le capteur de détection d'objet de type installation (11), et l'appareil de commande, et un moyen d'alimentation pour fournir une puissance électrique au capteur environnemental et au capteur de détection d'objet de type installation (11).

7. Système de surveillance selon la revendication 5 ou 6, comprenant en outre :
un appareil d'entrée/de levage et de récupération (16) qui comporte un moyen pour entrer, et lever et récupérer le véhicule (15), et un moyen pour fournir de l'électricité au véhicule (15), dans lequel
le véhicule (15) est entré à partir de l'appareil d'entrée/de levage et de récupération (16), et retourne à l'appareil d'entrée/de levage et de récupération (16), sur la base d'une commande par l'appareil de commande.

8. Procédé de surveillance, comprenant :
prédire, sur la base d'un résultat de mesure d'un environnement d'une région dans laquelle un objet doit être détecté, une zone de couverture qui est une plage dans laquelle un capteur de détection d'objet de type installation (11) peut réaliser une mesure ; et
déterminer une position dans laquelle un capteur de détection d'objet mobile (15) doit être disposé, sur la base d'un coût de déplacement qui est un indicateur indiquant une charge d'un déplacement du capteur de détection d'objet mobile à partir d'une position actuelle, de la zone de couverture prédite et d'une probabilité que l'objet soit présent, et commander le capteur mobile.

9. Procédé de surveillance selon la revendication 8, comprenant en outre :
comparer un indicateur calculé sur la base du coût de déplacement, de la zone de couverture et d'une probabilité que l'objet soit présent, avec une valeur de référence, et déterminer si une mesure par le capteur de détection d'objet mobile est nécessaire ou non.

10. Procédé de surveillance selon la revendication 8 ou 9, comprenant en outre :
lorsqu'il est déterminé qu'il y a une pluralité de points qui nécessitent une mesure par le capteur de détection d'objet mobile, déterminer, sur la base du coût de déplacement, s'il faut ou non permettre un déplacement, après qu'une mesure a été achevée au niveau d'un premier point qui nécessite une mesure, vers un deuxième point qui est un point qui nécessite une mesure différente du premier point.

11. Procédé de surveillance selon l'une quelconque des revendications 8 à 10, comprenant en outre
le calcul du coût de déplacement, sur la base d'une quantité restante d'une source de puissance du capteur de détection d'objet mobile.

12. Programme de commande pour amener un ordinateur à exécuter :
un traitement de prédiction de zone de couverture pour prédire, sur la base d'un résultat de mesure d'un environnement d'une région dans laquelle un objet doit être détecté, une zone de couverture qui est une plage dans laquelle un capteur de détection d'objet de type installation (11) peut réaliser une mesure ; et
un traitement de commande pour déterminer une position dans laquelle un capteur de détection d'objet mobile (15) doit être disposé, sur la base d'un coût de déplacement qui est un indicateur indiquant une charge d'un déplacement du capteur mobile à partir d'une position actuelle, de la zone de couverture prédite dans le traitement de prédiction de zone de couverture et d'une probabilité que l'objet soit présent, et pour commander le capteur de détection d'objet mobile.
